# EUROPEAN PATENT APPLICATION

(11) **EP 4 835 726 A1**
(43) Date of publication of application: **04.11.2026**
(21) Application number: 24909727.0
(22) Date of filing: 30.07.2024
(51) Int. Cl.: G06F 30/20, G06F 18/25, F03D 1/06

(54) **AIRFOIL AERODYNAMIC CHARACTERISTIC DATA CORRECTION METHOD AND APPARATUS, AND STORAGE MEDIUM**

(30) Priority: 29.12.2023 CN 202311865378
(71) Applicant: Jiangsu Goldwind Science & Technology Co., Ltd., Yancheng, Jiangsu 224100 (CN)
(72) Inventor: ZHAO, Xiong, Yancheng, Jiangsu 224100 (CN); ZHANG, Lei, Yancheng, Jiangsu 224100 (CN); LI, Quanzhou, Yancheng, Jiangsu 224100 (CN); LIU, Fang, Yancheng, Jiangsu 224100 (CN)
(74) Representative: Hoffmann Eitle
(86) International application number: PCT/CN2024/108376
(87) International publication number: WO 2025/138773

(57) **Abstract**

The present disclosure provides an airfoil aerodynamic characteristic data correction method and apparatus, and a storage medium. The method comprises: acquiring raw aerodynamic characteristic data of a reference airfoil and topcoat aerodynamic characteristic data; performing fitting processing on the acquired data to obtain a correction parameter; acquiring raw aerodynamic characteristic data of a target airfoil; and on the basis of the correction parameter, correcting the raw aerodynamic characteristic data of the target airfoil to obtain the corrected aerodynamic characteristic data of the target airfoil. The present disclosure can improve the consistency of simulation and testing.

## Description

### TECHNICAL FIELD

The present disclosure relates to the field of wind power generation, and more particularly, to a method and an apparatus for correcting aerodynamic-characteristic data of an airfoil, and a storage medium.

### BACKGROUND

At present, a wind-turbine capacity is increasingly growing, and a blade of a wind turbine is becoming longer and longer. The blade is a crucial component of the wind turbine, and aerodynamic performance of the blade directly affects a power generation efficiency of the wind turbine. The blade design is based on the Blade Element Momentum (BEM) Theory, in which interpolation is performed based on several standard airfoils, and a relative thickness, a chord length, and a twist angle are designed according to a certain spanwise (referring to a length direction of the blade span extension) distribution based on the several standard airfoils. Therefore, respective aerodynamic performances of the selected standard airfoils determine the aerodynamic performance of the blade, and aerodynamic-characteristic data of an airfoil is important data for measuring the aerodynamic performance of the airfoil. Thus, in order to learn the aerodynamic performance of the blade, it is necessary to first learn the aerodynamic-characteristic data of the standard airfoils.

Currently, a wind tunnel test is a relatively reliable technical means for acquiring the aerodynamic-characteristic data of the airfoil. However, airfoil models used in the test are all finely ground and polished to ensure a blade shape is consistent with a theoretical shape to the maximum extent. However, a blade actually applied to the wind turbine is further covered with a topcoat. It is unclear what influence the topcoat will have on the aerodynamic-characteristic data of the airfoil and the aerodynamic performance of the blade, but currently, research thereon is very limited in the industry.

### SUMMARY

In view of above, how to learn the aerodynamic-characteristic data of an airfoil corresponding to a blade covered with a topcoat is crucial for clarifying the influence of the topcoat on the aerodynamic performance of a blade.

In a general aspect, a method for correcting aerodynamic-characteristic data of an airfoil is provided, and the method for correcting aerodynamic-characteristic data of an airfoil includes: acquiring original aerodynamic-characteristic data and topcoat aerodynamic-characteristic data of a reference airfoil, where the topcoat aerodynamic-characteristic data is data obtained by performing an aerodynamic-characteristic test on a reference airfoil model covered with a topcoat, and the reference airfoil model is an equivalent-airfoil polished model having the reference airfoil; performing fitting processing on the original aerodynamic-characteristic data and the topcoat aerodynamic-characteristic data of the reference airfoil to obtain a correction parameter; acquiring original aerodynamic-characteristic data of a target airfoil; and correcting the original aerodynamic-characteristic data of the target airfoil according to the correction parameter to obtain corrected aerodynamic-characteristic data of the target airfoil .

In another general aspect, a method for determining aerodynamic-performance data of a blade is provided, and the method for determining aerodynamic-performance data of a blade includes: acquiring a basic airfoil used in a design stage of a target blade and corrected aerodynamic-characteristic data of the basic airfoil; and determining aerodynamic-performance data of the target blade according to the corrected aerodynamic-characteristic data of the basic airfoil, where the corrected aerodynamic-characteristic data of the basic airfoil is obtained by the method for correcting aerodynamic-characteristic data of an airfoil according to the embodiments of the present disclosure.

In another general aspect, an apparatus for correcting aerodynamic-characteristic data of an airfoil is provided, and the apparatus for correcting aerodynamic-characteristic data of an airfoil includes: a reference acquiring unit, configured to acquire original aerodynamic-characteristic data and topcoat aerodynamic-characteristic data of a reference airfoil, where the topcoat aerodynamic-characteristic data is data obtained by performing an aerodynamic-characteristic test on a reference airfoil model covered with a topcoat, and the reference airfoil model is an equivalent-airfoil polished model having the reference airfoil; a fitting unit, configured to perform fitting processing on the original aerodynamic-characteristic data and the topcoat aerodynamic-characteristic data of the reference airfoil to obtain a correction parameter; a target acquiring unit, configured to acquire original aerodynamic-characteristic data of a target airfoil; and a correcting unit, configured to correct the original aerodynamic-characteristic data of the target airfoil according to the correction parameter to obtain corrected aerodynamic-characteristic data of the target airfoil.

In another general aspect, an apparatus for determining aerodynamic-performance data of a blade is provided, and the apparatus for determining aerodynamic-performance data of a blade includes: an acquiring unit, configured to acquire a basic airfoil used in a design stage of a target blade and corrected aerodynamic-characteristic data of the basic airfoil; and a determining unit, configured to determine aerodynamic-performance data of the target blade according to the corrected aerodynamic-characteristic data of the basic airfoil, where the corrected aerodynamic-characteristic data of the basic airfoil is obtained by the method for correcting aerodynamic-characteristic data of an airfoil according to embodiments of the present disclosure.

In another general aspect, a computer-readable storage medium is provided, where when instructions in the computer-readable storage medium are run by at least one processor, the at least one processor is caused to execute the method for correcting aerodynamic-characteristic data of an airfoil or the method for determining aerodynamic-performance data of a blade according to embodiments of the present disclosure.

In another general aspect, a computer device is provided, including: at least one processor; at least one memory storing computer-executable instructions, where when the computer-executable instructions are run by the at least one processor, the at least one processor is caused to execute the method for correcting aerodynamic-characteristic data of an airfoil or the method for determining aerodynamic-performance data of a blade according to embodiments of the present disclosure.

The present disclosure proposes a method and an apparatus for correcting aerodynamic-characteristic data of an airfoil, a method and an apparatus for determining aerodynamic-performance data of a blade, a computer-readable storage medium, and a computer device. By performing an aerodynamic-characteristic test on a reference airfoil model covered with a topcoat, topcoat aerodynamic-characteristic data of a corresponding reference airfoil can be obtained with consideration of the influence of the topcoat, thereby determining a correction parameter in combination with the original aerodynamic-characteristic data and the topcoat aerodynamic-characteristic data, thus enabling to more clearly reflect the influence of the topcoat on the aerodynamic characteristics of the airfoil. Based on this, by correcting the original aerodynamic-characteristic data of the target airfoil using the correction parameter, the aerodynamic-characteristic data of another airfoil (i.e., the target airfoil) to which a blade is covered with topcoat corresponds can be inferred using a small number of tests (i.e., tests for the reference airfoil), and used as the corrected aerodynamic-characteristic data, so that the corrected aerodynamic-characteristic data of the airfoil is more consistent with actual operating conditions, being conducive to clarifying the influence of the topcoat on the aerodynamic performance of the blade, better understanding an operating state of the blade and the wind turbine, and improving a consistency between simulation and testing of the blade and the whole wind turbine.

It should be understood that the foregoing general description and the following detailed description are merely exemplary and explanatory, and cannot limit the present disclosure.

### BRIEF DESCRIPTION OF THE DRAWINGS

The above and other purposes and features of the present disclosure will become clearer from the following description of embodiments in conjunction with the accompanying drawings, in which:
FIG. 1 shows an aerodynamic-characteristic curve of a lift coefficient varying with an angle of attack;
FIG. 2 shows an aerodynamic-characteristic curve of a drag coefficient varying with an angle of attack;
FIG. 3 shows an aerodynamic-characteristic curve of a pitching moment coefficient varying with an angle of attack;
FIG. 4 shows an aerodynamic-characteristic curve of a lift-to-drag ratio varying with an angle of attack;
FIG. 5 is a flowchart illustrating a method for correcting aerodynamic-characteristic data of an airfoil according to an embodiment of the present disclosure;
FIG. 6 shows a clean aerodynamic-characteristic curve and a topcoat aerodynamic-characteristic curve of a lift coefficient varying with an angle of attack according to a specific embodiment of the present disclosure;
FIG. 7 shows a clean aerodynamic-characteristic curve and a topcoat aerodynamic-characteristic curve of a lift coefficient varying with a drag coefficient according to a specific embodiment of the present disclosure;
FIG. 8 shows a clean aerodynamic-characteristic curve and a topcoat aerodynamic-characteristic curve of a pitching moment coefficient varying with an angle of attack according to a specific embodiment of the present disclosure;
FIG. 9 shows a clean aerodynamic-characteristic curve and a topcoat aerodynamic-characteristic curve of a lift-to-drag ratio varying with an angle of attack according to a specific embodiment of the present disclosure;
FIG. 10 is a flowchart illustrating a method for determining aerodynamic-performance data of a blade according to an embodiment of the present disclosure;
FIG. 11 is a block diagram illustrating an apparatus for correcting aerodynamic-characteristic data of an airfoil according to an embodiment of the present disclosure;
FIG. 12 is a block diagram illustrating an apparatus for determining aerodynamic-performance data of a blade according to an embodiment of the present disclosure; and
FIG. 13 is a block diagram illustrating a computer device according to an embodiment of the present disclosure.

### DETAILED DESCRIPTION

The following detailed description is provided to assist the reader in gaining a comprehensive understanding of the methods, devices, and/or systems described herein. However, various changes, modifications, and equivalents of the methods, devices, and/or systems described herein will be apparent upon understanding the disclosure of the present application. For example, the sequences of operations described herein are merely examples, and are not limited to those set forth herein, but may be changed, except for operations that must occur in a specific order, as will be apparent upon understanding the disclosure of the present application. In addition, descriptions of features known in the art may be omitted for greater clarity and conciseness.

The features described herein may be implemented in different forms and should not be construed as limited to the examples described herein. Rather, the examples described herein have been provided merely to illustrate some of the many possible ways of implementing the methods, devices, and/or systems described herein, which will be apparent upon understanding the disclosure of the present application.

As used herein, the term "and/or" includes any one of the associated listed items and any combination of any two or more.

Although terms such as "first," "second," and "third" may be used herein to describe various members, components, regions, layers, or portions, these members, components, regions, layers, or portions should not be limited by these terms. Rather, these terms are only used to distinguish one member, component, region, layer, or portion from another. Therefore, a first member, a first component, a first region, a first layer, or a first portion referred to in the examples described herein could also be termed a second member, a second component, a second region, a second layer, or a second portion without departing from the teachings of the examples.

In the specification, when an element (such as a layer, region, or substrate) is described as being "on," "connected to," or "coupled to" another element, it may be directly on, directly connected to, or directly coupled to the other element, or one or more other intervening elements may be present. In contrast, when an element is described as being "directly on," "directly connected to," or "directly coupled to" another element, no intervening elements may be present.

The terminology used herein is for the purpose of describing various examples only and is not intended to be limiting of the disclosure. Singular forms are intended to include plural forms as well, unless the context clearly indicates otherwise. The terms "comprising," "including," and "having" indicate the presence of stated features, numbers, operations, members, elements, and/or combinations thereof, but do not preclude the presence or addition of one or more other features, numbers, operations, members, elements, and/or combinations thereof.

Unless otherwise defined, all terms (including technical and scientific terms) used herein have the same meaning as commonly understood by one of ordinary skill in the art to which this disclosure belongs upon understanding the present disclosure. Unless explicitly defined as such herein, terms (such as those defined in commonly used dictionaries) should be interpreted as having a meaning consistent with their meaning in the context of the relevant art and the present disclosure, and will not be interpreted in an idealized or overly formal sense.

In addition, in describing the examples, detailed descriptions of well-known related structures or functions will be omitted when it is considered that they would cause an ambiguous interpretation of the present disclosure.

In aerodynamic design of a blade, a designer selects different designed standard airfoils and different designed lift points, and designs aerodynamic shape parameters such as a lift coefficient, a relative thickness, a chord length, a twist angle, a pre-bend, and a sweep along the blade spanwise direction through the blade element momentum (BEM) theory. The standard airfoils used in blade design can be airfoils open to the public within the industry, such as National Advisory Committee for Aeronautics (NACA) airfoil series, Delft University (DU) airfoil series (an airfoil family dedicated for wind turbine blades and designed by Delft University of Technology), or may be airfoils designed by blade developers themselves. The airfoils open to the public within the industry are often provided with publicly available aerodynamic-characteristic data, while the airfoils designed by the blade developers are known to respective blade developers. However, in either case, the wind tunnel test remains a technical means for obtaining accurate and reliable aerodynamic-characteristic data of the airfoil.

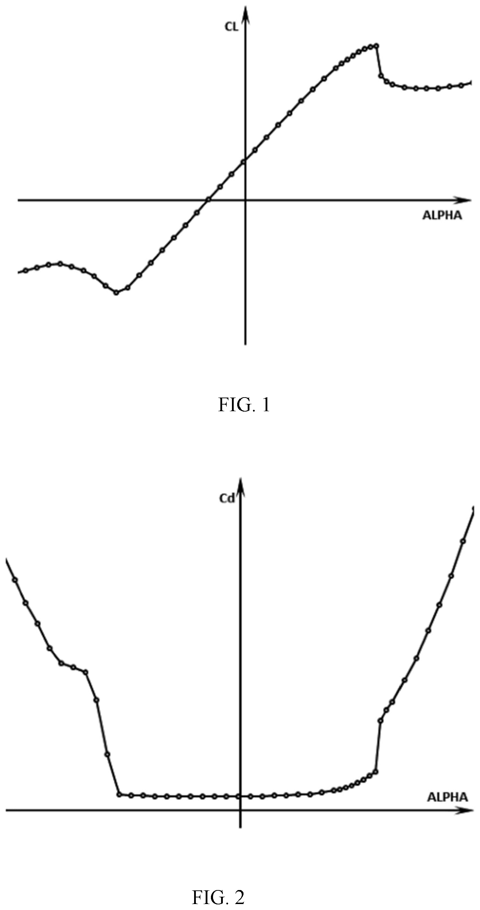

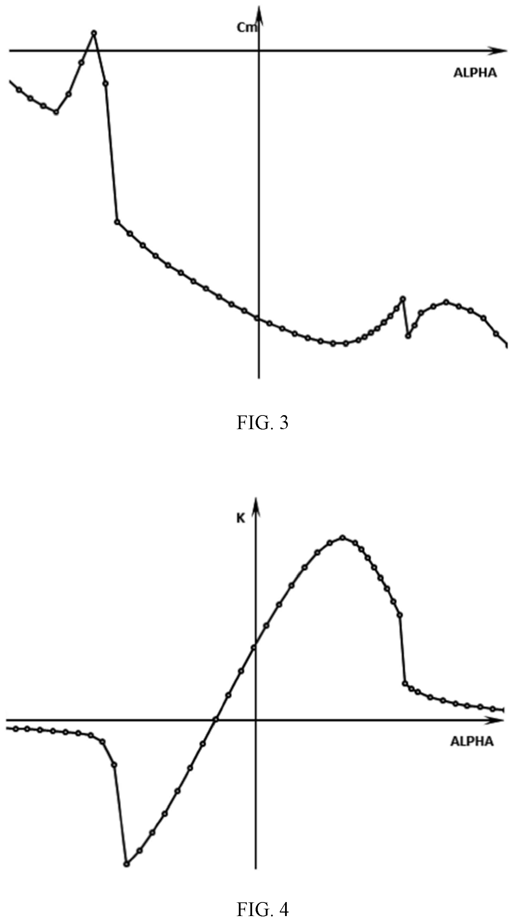

In the wind tunnel test, an airfoil shape of a two-dimensional airfoil model is typically processed, and aerodynamic-characteristic data of the airfoil is obtained through pressure measurement or force measurement techniques. In an implementation, during the test, values of some specific aerodynamic parameters under different inflow conditions are measured. These aerodynamic parameters include, but are not limited to, the lift coefficient CL, the drag coefficient Cd, the pitching moment coefficient Cm, and the lift-to-drag ratio K (CL/Cd). The respective curves (e.g., FIG. 1 to FIG. 4) of these aerodynamic parameters varying with the angle of attack (ALPHA), or curves each using two of them as x-y axes, are called aerodynamic-characteristic curves of the airfoil, which can be used as the aerodynamic-characteristic data of the airfoil and used in calculating aerodynamic performance of the blade (the aerodynamic performance of the blade is often represented by parameters such as a load, a power coefficient, or the like). In other words, the aerodynamic performance of the blade is directly related to the aerodynamic-characteristic curves exhibited by the standard airfoils.

An airfoil model used in the test is typically processed from metal or carbon fiber materials with surfaces being finely ground and polished to ensure its shape to be consistent with the theoretical shape to a maximum extent. However, currently, a material system of an actual blade is composed of glass fiber,epoxy resin, core material, and a surface-paint system. In particular, the blade surface is not as smooth as that of the airfoil model used in the wind tunnel test, but has a surface with a certain roughness like orange peel due to the characteristics of the topcoat. However, when the blade surface is in such a state, some issues exist, such as whether the aerodynamic characteristics of the airfoil will change relative to those of the airfoil model in the wind tunnel test, and if so, how great the change is, and how great the impact on the whole wind turbine is, and these issues have been rarely studied in the domestic industry and even worldwide. However, these issues must be faced when addressing the problems in performance consistency of blade and whole wind turbine.

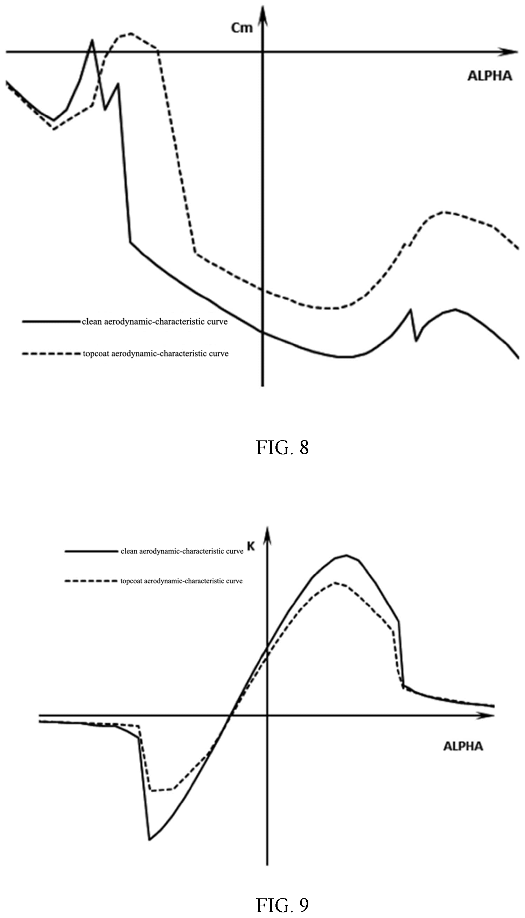

A method and an apparatus for correcting aerodynamic-characteristic data of an airfoil, a method and an apparatus for determining aerodynamic-performance data of a blade, a computer-readable storage medium, and a computer device provided by embodiments of the present disclosure will be described below in combination with FIG. 1 to FIG. 13.

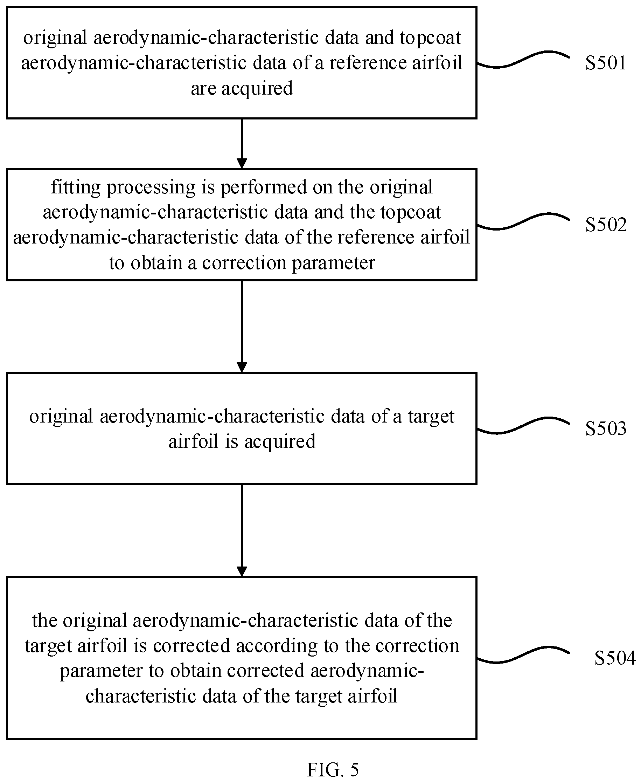

A method for correcting aerodynamic-characteristic data of an airfoil is provided in embodiments of an aspect of the present disclosure. FIG. 5 is a flowchart illustrating a method for correcting aerodynamic-characteristic data of an airfoil according to an embodiment of the present disclosure.

Referring to FIG. 5, in step S501, original aerodynamic-characteristic data and topcoat aerodynamic-characteristic data of a reference airfoil are acquired.

The topcoat aerodynamic-characteristic data is data obtained by performing an aerodynamic-characteristic test on a reference airfoil model covered with a topcoat. As an example, the aerodynamic-characteristic test is a wind tunnel test, and aerodynamic-characteristic data of an airfoil is obtained through pressure measurement or force measurement techniques. In an implementation, the data directly measured in the test are the aforementioned aerodynamic parameters, and the obtained aerodynamic-characteristic data are the aerodynamic-characteristic curves. The reference airfoil model is an equivalent polished airfoil model having the reference airfoil, that is, a two-dimensional airfoil model having a shape of the reference airfoil, which is a blade form commonly used in the existing wind tunnel test.

The original aerodynamic-characteristic data is the existing aerodynamic-characteristic data of the reference airfoil, which can also be obtained through the wind tunnel test. In an implementation, according to the different surface roughness degrees of the airfoil model, the airfoil model surface conditions include a clean condition and a rough condition. The clean condition corresponds to a polished surface which is not covered with the topcoat, and the reference airfoil model corresponds to the clean condition. The rough condition corresponds to a surface that causes the flow around the airfoil to reach a fully turbulent state. The clean condition and the rough condition are two extreme conditions of the airfoil model surface without damaging the profile. The original aerodynamic-characteristic data at least includes clean aerodynamic-characteristic data under the clean condition, which is also the airfoil aerodynamic-characteristic data usually used in the related technologies when calculating the blade performance. In addition, according to the needs of actual schemes, the original aerodynamic-characteristic data may also include rough aerodynamic-characteristic data under the rough condition.

In step S502, fitting processing is performed on the original aerodynamic-characteristic data and the topcoat aerodynamic-characteristic data of the reference airfoil to obtain a correction parameter.

The correction parameter can represent a conversion relationship between the original aerodynamic-characteristic data and the topcoat aerodynamic-characteristic data.

In an implementation, the correction parameter includes at least one of a combination ratio and a correction amount, each corresponding to a correction mode. In a correction mode using the combination ratio, the original aerodynamic-characteristic data includes both clean aerodynamic-characteristic data and rough aerodynamic-characteristic data. The combination ratio is used to combine the clean aerodynamic-characteristic data and the rough aerodynamic-characteristic data of the reference airfoil, so that a combined result approximates the topcoat aerodynamic-characteristic data. Thus, it is possible to determine, in combination with respective pieces of aerodynamic-characteristic data under the two extreme conditions, the aerodynamic-characteristic data in the topcoat condition (i.e., a state where a blade for a corresponding airfoil is covered with the topcoat) between the two extreme conditions, being conducive to ensuring the reliability of the corrected result. For a correction mode using the correction amount, the original aerodynamic-characteristic data includes clean aerodynamic-characteristic data. The correction amount includes at least one of an absolute correction value and a correction proportion. The correction amount is used to correct the clean aerodynamic-characteristic data of the reference airfoil, so that the corrected result approximates the topcoat aerodynamic-characteristic data. Thus, it is possible to perform correction by means of a small amount of original data, being conducive to reducing data dependency during the correction process.

It should be noted that, as shown in FIG. 1 to FIG. 4, an aerodynamic-characteristic curve is often not a curve with a constant changing trend, and there exhibits sudden changes at some points. Based on this, the correction parameter may not be a value that remains unchanged for any abscissa value, but can take different values in respective value ranges according to actual conditions, so as to fully ensure the accuracy of the correction result.

In step S503, original aerodynamic-characteristic data of a target airfoil is acquired.

The target airfoil is an airfoil of which aerodynamic-characteristic data is required to be corrected.

In step S504, the original aerodynamic-characteristic data of the target airfoil is corrected according to the correction parameter to obtain corrected aerodynamic-characteristic data of the target airfoil.

The corrected aerodynamic-characteristic data is inferred aerodynamic-characteristic data of the target airfoil corresponding to the blade covered with the topcoat.

According to the method for correcting aerodynamic-characteristic data of an airfoil of an exemplary embodiment of the present disclosure, by performing an aerodynamic-characteristic test on a reference airfoil model covered with a topcoat, topcoat aerodynamic-characteristic data of a corresponding reference airfoil can be obtained with consideration of the influence of the topcoat, thereby determining a correction parameter in combination with the original aerodynamic-characteristic data and the topcoat aerodynamic-characteristic data, thus enabling to more clearly reflect the influence of the topcoat on the aerodynamic characteristics of the airfoil. Based on this, by correcting the original aerodynamic-characteristic data of the target airfoil using the correction parameter, the aerodynamic-characteristic data of another airfoil (i.e., the target airfoil) to which a blade is covered with topcoat corresponds can be inferred using a small number of tests (i.e., tests for the reference airfoil), and used as the corrected aerodynamic-characteristic data, so that the corrected aerodynamic-characteristic data of the airfoil is more consistent with actual operating conditions, being conducive to clarifying the influence of the topcoat on the aerodynamic performance of the blade, better understanding an operating state of the blade and the wind turbine, and improving a consistency between simulation and testing of the blade and the whole wind turbine.

In the following, the method for correcting aerodynamic-characteristic data of an airfoil according to exemplary embodiments of the present disclosure will be further described.

There is a relationship between the reference airfoil and the target airfoil. That is, for a specific reference airfoil, a relationship reflecting which airfoils other than the specific reference airfoil can be used as target airfoils, such that the correction parameter of the specific reference airfoil can be used to correct their own aerodynamic-characteristic data. It can be understood that this relationship describes an applicable range of the correction parameter of the reference airfoil, that is, to which airfoils other than the specific reference airfoil the correction parameter of the reference airfoil can be applied. By reasonably determining this relationship, the reliability of the corrected result for the target airfoil can be improved.

In an implementation, the reference airfoil and the target airfoil belong to the same airfoil family. An airfoil family refers to a group of airfoils with similar geometric features and aerodynamic characteristics. The group of airfoils are generally developed from the same basic design by changing certain design parameters (such as the relative thickness, a bending degree, bending positions, etc.). Different airfoils within the same airfoil family have similar aerodynamic characteristics, enabling to apply the correction parameter among these airfoils more reliably.

In an implementation, the topcoat aerodynamic-characteristic data is aerodynamic-characteristic data of the reference airfoil corresponding to the blade covered with the topcoat and having a target roughness, a topcoat roughness of the target airfoil is within a target roughness range, and the target roughness range is related to the target roughness. The influence of the topcoat on the aerodynamic characteristics of the airfoil is likely due to the change in roughness of the airfoil. By using the topcoat roughness as a parameter describing the relationship between the reference airfoil and the target airfoil, the correction parameter of the reference airfoil is applied to an airfoil with a topcoat roughness being within the target roughness range, which is conducive to ensuring the application effectiveness, thereby improving the reliability of the corrected result for the target airfoil. It should be understood that the target roughness is also within the target roughness range, that is, the topcoat roughnesses of the reference airfoil and that of the target airfoil should be relatively close. The target roughness range can be specifically determined by: performing, according to different requirements for the accuracy of the corrected result, tests on the reference airfoil at respective topcoat roughnesses, and then determining a reasonable target roughness range by comparing values of the correction parameter corresponding to different topcoat roughnesses. As an example, respective surface roughnesses, i.e., the topcoat roughnesses, of blades produced by different manufacturers in the industry and have reached the factory state can be first acquired, and then the roughness range that can be applied to most or all blades on the market can be determined in a statistical manner. Then, a test is carried out for two endpoint values of this roughness range (i.e., the two endpoint values of the roughness range are respectively taken as a target roughness to perform the aerodynamic-characteristic test, and to perform steps S501 and S502 of the present disclosure). If test results show that respective correction parameters for the two endpoint values are close, for example, a ratio of the smaller correction parameter to the larger correction parameter for the two endpoint values is greater than or equal to a set ratio (such as 0.95), it is considered that the topcoat roughness will not affect the aerodynamic-characteristic data. From the perspective of topcoat roughness, the correction parameter of the reference airfoil can be applied to any airfoil with a different topcoat roughness. However, if the difference between the respective correction parameters for the two endpoint values is large, for example, the ratio of the smaller correction parameter to the larger correction parameter for the two endpoint values is less than the set ratio, it is considered that the topcoat roughness will affect the aerodynamic-characteristic data. The roughness range can be simply divided into two sections, each being used as a target roughness sub-range, and respective target roughnesses corresponding to the two target roughness sub-ranges are the two endpoint values of the original roughness range. Of course, other roughnesses can also be selected from the original roughness range for further testing, and corresponding correction parameters can be determined. By determining whether the respective roughnesses obtained accordingly through the test are close to each other, the original roughness range can be divided to into several target roughness sub-ranges. At this time, the more roughnesses used to perform the test, the greater the division accuracy of the target roughness range can be improved, but in turn requiring higher costs. In practice, the test can be reasonably designed in combination with actual situations, which is not limited in the present disclosure.

In an implementation, the relative thickness of the target airfoil is within a target relative-thickness range, and the target relative-thickness range is related to the relative thickness of the reference airfoil. A thickness of an airfoil refers to the maximum dimension of the airfoil in a direction perpendicular to the chordwise direction. The chordwise direction refers to a direction in which the chord line of the airfoil extends. The chord line is a line connecting a leading edge and a trailing edge of the airfoil, and a length of the chord line is called the chord length. To achieve non-dimensionalization, the relative thickness of an airfoil is usually represented by a ratio of the thickness of the airfoil to the chord length thereof. The relative thickness of the airfoil often also significantly affects its aerodynamic characteristics. By using the relative thickness of the airfoil as a parameter describing the relationship between the reference airfoil and the target airfoil, and applying the correction parameter of the reference airfoil to airfoils with a relative thickness being within the target relative-thickness range, it is conducive to ensuring the effectiveness of this application, thereby improving the reliability of the corrected result for the target airfoil. Similar to the topcoat roughness, the relative thickness of the reference airfoil is also within the target relative-thickness range, that is, the relative thicknesses of the reference airfoil and the target airfoil should be relatively close to each other, and the target relative-thickness range can be specifically determined by reasonably designing the test in combination with actual situations.

It should be understood that it can only use the topcoat roughness as the parameter describing the relationship between the reference airfoil and the target airfoil, only use the relative thickness of the airfoil as the parameter describing the relationship between the reference airfoil and the target airfoil, or use both the topcoat roughness and the relative thickness of the airfoil as parameters describing the relationship between the reference airfoil and the target airfoil, so as to increase the description dimensions. In addition and in general, roughness can be specifically described by different parameters such as an arithmetic average roughness Ra, a ten-point height average Rz, a root mean square roughness Rq, a total height Rt, a roughness profile length Rc, a mean spacing Rsm of roughness profile elements, a relative material ratio Rmr, a total profile-unevenness Pt, a slope Pmr of the material ratio curve, etc. Therefore, at least one of these parameters can also be selected as the topcoat roughness.

In an implementation, after obtaining the correction parameters for multiple airfoils with different relative thicknesses in the same airfoil family (hereinafter referred to as the first airfoil family) under multiple different target roughnesses through the test or further in combination with the correction method of the present disclosure, if it is still necessary to correct a target airfoil (hereinafter referred to as a second target airfoil) in another airfoil family (hereinafter referred to as the second airfoil family) based on a reference airfoil(hereinafter referred to as a second reference airfoil) in the second airfoil family, a correction parameter of the first airfoil family can also be taken as a reference, that is, step S504 includes: determining a correction parameter of the second target airfoil according to a correction parameter of the first airfoil family and a correction parameter of the second reference airfoil; and correcting original aerodynamic-characteristic data of the second target airfoil according to the correction parameter of the second target airfoil, to obtain corrected aerodynamic-characteristic data of the second target airfoil. In other words, it means first correcting the correction parameter of the second reference airfoil based on the correction parameter of the first airfoil family, to obtain the correction parameter of the second target airfoil, and then correcting the aerodynamic-characteristic data of the second target airfoil based on the obtained correction parameter, which can further increase the applicable range of the correction parameter, reduce a test number for the second airfoil family, and help save costs. For example, if a relative thickness of the second reference airfoil is 25%, a relative thickness of the second target airfoil is 30%, and their topcoat roughnesses are equal, correction parameters of the two airfoils in the second airfoil family can be respectively recorded as a second 25% correction parameter (which is known) and a second 30% correction parameter (which is unknown). Further, it can select correction parameters of two airfoils, with the same topcoat roughness as the two airfoils in the second airfoil family and relative thicknesses of 25% and 30% respectively, from the first airfoil family and determine correction parameters of the same to be a first 25% correction parameter and a first 30% correction parameter (both are known) respectively. Then, an equation can be established where a ratio of the first 25% correction parameter to the first 30% correction parameter equals a ratio of the second 25% correction parameter to the second 30% correction parameter, thereby the second 30% correction parameter can be calculated.

In embodiments in which the topcoat roughness is used as a parameter for describing the relationship between the reference airfoil and the target airfoil, it is necessary to determine the value of the target roughness in the current test, so as to determine the target roughness range and reproduce the target roughness in the aerodynamic-characteristic test, that is, to determine the topcoat roughness of the reference airfoil model covered with the topcoat equal to the target roughness.

In this regard, in some embodiments, the method for correcting aerodynamic-characteristic data of an airfoil according to exemplary embodiments of the present disclosure further includes: acquiring multiple roughness sampled values of a to-be-tested blade, where the to-be-tested blade is a blade designed based on the reference airfoil and covered with the topcoat; and performing statistical processing on the multiple roughness sampled values to obtain the target roughness. By actually measuring the roughness sampled values of the to-be-tested blade that is designed and processed based on the reference airfoil, and obtaining the target roughness by the statistical processing, it can be ensured that this target roughness can indeed be applied to the reference airfoil, ensuring the practicability of the test result. As an example, multiple discrete spanwise positions can be selected along the spanwise direction of the to-be-tested blade for roughness sampling. Further, for each spanwise position, sampling can be performed only for a specific area, for example, a position area within 40% of the chord length from the leading edge in the chordwise direction, because this area has the most obvious influence on the aerodynamic performance of the to-be-tested blade, so as to improve the acquisition efficiency of the roughness sampled values. As an example, the statistical processing on the multiple roughness sampled values is performed so as to convert the multiple roughness sampled values into a numerical value sufficient to represent the topcoat roughness condition of the to-be-tested blade, i.e., the target roughness. Therefore, this statistical processing can be a processing of calculating a statistical value (such as an average value, a median, a mode, etc.). Further, data cleaning can also be performed before calculating the statistical value to filter out obviously abnormal roughness sampled values. Statistical processing can be performed by using the existing technology of data processing and will not be detailed here. It should be understood that the statistical processing of roughnesses here is performed to convert the multiple roughness sampled values of the same blade (i.e., the to-be-tested blade) into one value to determine the roughness condition of this blade. By contrast, the aforementioned operation of obtaining the roughness range in a statistical manner is performed by collecting respective surface roughnesses of various existing blades in the industry to determine a value range to which these roughnesses belong, which is a completely different process.

In an implementation, the operation of acquiring the topcoat aerodynamic-characteristic data of the reference airfoil in step S501 includes: acquiring at least one piece of first tested aerodynamic-characteristic data and at least one piece of second tested aerodynamic-characteristic data, where the first tested aerodynamic-characteristic data is obtained by performing the aerodynamic-characteristic test on a first reference airfoil model having a topcoat roughness less than the target roughness, and the second tested aerodynamic-characteristic data is obtained by performing the aerodynamic-characteristic test on a second reference airfoil model having a topcoat roughness greater than the target roughness; and performing interpolation processing on the at least one piece of first tested aerodynamic-characteristic data and the at least one piece of second tested aerodynamic-characteristic data according to the target roughness, to obtain the topcoat aerodynamic-characteristic data. By acquiring tested data on different roughnesses smaller than and greater than the target roughness, and then performing interpolation to obtain the data at the target roughness as the topcoat aerodynamic-characteristic data, it is not necessary to strictly reproduce the target roughness during the test, being conducive to reducing the test difficulty and improve the feasibility of the test.

As an example, in embodiments in which at least two specific parameters are used to describe the topcoat roughness, two pieces of tested data can be acquired for the value of each specific parameter respectively and interpolation processing is performed accordingly to obtain the aerodynamic-characteristic data corresponding to each specific parameter. Then, statistical processing is performed on these pieces of aerodynamic-characteristic data obtained through interpolation processing, and the statistical result as obtained is used as the topcoat aerodynamic-characteristic data. For example, in a case that the two specific parameters, i.e. the arithmetic average roughness Ra and the ten-point height average Rz, are both used, the aerodynamic-characteristic data corresponding to the arithmetic average roughness Ra and the aerodynamic-characteristic data corresponding to the ten-point height average Rz can be obtained respectively. Statistical processing, such as but not limited to calculating an average value or a weighted sum, can be performed on these two pieces of aerodynamic-characteristic data, and then the statistical result is used as the topcoat aerodynamic-characteristic data.

In the interpolation processing for each specific parameter, as an example, weights for respective pieces of tested data can be determined according to a magnitude relationship among the value of the specific parameter and the parameter values smaller than and greater than this value in the test. For example, for a target value Ra1 of the arithmetic average roughness Ra and the two parameter values Ra2 and Ra3 smaller than and greater than the target value Ra1, values of α and β in an equation Ra1=αRa2+βRa3 can be determined, and then weighted summing is performed on the pieces of tested data by using α and β as respective weights to obtain the aerodynamic-characteristic data corresponding to this specific parameter Ra1. In addition, for a point or a range where the trend of the aerodynamic-characteristic curve exhibits a sudden change, the weights can also be locally adjusted to improve the reasonableness of the aerodynamic-characteristic data obtained by interpolation, thereby improving its accuracy.

In some other embodiments, it is not necessary to directly measure the target roughness of the to-be-tested blade, but to obtain in advance a correspondence between process parameters used when processing the topcoat and a resulting topcoat roughness in a statistical manner, and record the same in process-roughness correspondence information. Then the target roughness can be determined through information retrieval. As an example, the process parameters include at least one of a paint brand, a tool brand (such as a brand of a roller for roll-coating the topcoat, a brand of a tool for spraying the topcoat), ambient temperature, ambient humidity, and a number of coated topcoat layers. In an implementation, the process parameters used during processing the to-be-tested blade by coating the topcoat can be obtained from the manufacturer of the to-be-tested blade, and recorded as reference process parameters. The target roughness can be obtained by performing retrieval in the process-roughness correspondence information based on the reference process parameters, thereby enabling to relatively reliably obtain the value of the target roughness without obtaining the actual to-be-tested blade or without the need for measurement operations, improving the convenience of obtaining the target roughness. At this time, the reference airfoil model covered with the topcoat is a model obtained by covering the topcoat on the surface of the reference airfoil model according to the reference process parameters. That is, by determining the reference process parameters and then directly applying the same to the topcoat processing procedure of the reference airfoil model, a more direct correspondence between the reference airfoil model and the reference airfoil of the to-be-tested blade covered with the topcoat is achieved, thus achieving convenient and accurate reproduction of the target roughness in the aerodynamic-characteristic test. Thus, it is only necessary to perform the test on the airfoil model with the target roughness, which can reduce the test number and lower the test cost. Correspondingly, since the airfoil model used in the test reproduces the target roughness, the target roughness can also be obtained by performing measurement on the airfoil model used in the test, i.e., obtained by performing measurement on the reference airfoil model covered with the topcoat, which can further improve the precision of the determined value of the target roughness. It should be understood that both of the above two methods can be used to obtain the target roughness, with the first method serving as a preliminary confirmation and the second method serving as a pre-test review. Results obtained by these two methods are usually consistent with each other. If there is a difference, a result obtained by the pre-test review is used as a final result. If the difference is large, the process-roughness correspondence information can also be corrected based on this, being conducive to improving the accuracy of the information.

In addition, as mentioned earlier, in order to determine the target roughness range, it is necessary to first obtain the roughness range for most or all blades on the market in a statistical manner. However, the standard of a protection system in which the topcoat is used for the blade surface is not uniform for various blade manufacturers. This coating procedure is currently mostly completed by manual roll-coating or spraying in China and even internationally, and the rollers, paint systems, temperature and humidity, and the like as used are all different to some extent. Therefore, the respective surface states of blades each being covered with the topcoat are greatly different. Although manufacturers usually detect the roughness (i.e., topcoat roughness) for each blade they produce, measurement tools and tool parameter settings used by different manufacturers are often different, resulting in the roughnesses directly obtained from the manufacturers not having a unified standard. By first collecting the topcoat process parameters of various manufacturers, then uniformly measuring a large number of topcoat samples obtained according to the different process parameters, and obtaining the process-roughness correspondence information, it is possible to study the influence of sensitive process parameters such as the paint brand, the roller brand, the temperature, and the humidity on the surface state with the topcoat being coated. Furthermore, based on the topcoat process parameters of a certain blade, by performing retrieval in the process-roughness correspondence information, the topcoat roughness of this blade under this unified standard can be obtained. Thus, by innovatively using the topcoat process parameters of the blade to uniformly evaluate the surface state of the blade with the topcoat being coated, it is conducive to achieving a unified standard of data and it can flexibly and conveniently obtain the topcoat roughness of a newly produced blade. As an example, the topcoat samples used during the uniform measurement can be samples provided by the manufacturer, and the method for obtaining the target roughness described above can be used for sampling and statistical processing is performed. That is, multiple roughness sampled values are measured on each topcoat sample, and then statistical processing is performed to convert the multiple roughness sampled values into one statistical value, which serves as the topcoat roughness of that topcoat sample. It can also be obtained by coating paint on a flat plate according to the corresponding process parameters without actually measuring the blade, which is not limited in the present disclosure.

In addition, in some embodiments, optionally, a separative protective film (e.g., an organic material protective film) is arranged between the reference airfoil model and the topcoat, and a difference of a surface roughness of the separative protective film relative to a surface roughness of the reference airfoil model is less than a difference threshold. By first covering the reference airfoil model with the separative protective film, and then covering the reference airfoil model as obtained with the topcoat, the topcoat can be conveniently removed through the reference airfoil model protective film after the test is finished, realizing the reuse of the reference airfoil model, and being conducive to greatly reducing the test cost. Of course, the reference airfoil model can also be reused in tests of other scenes other than the scene of the present disclosure, and even the reference airfoil model can be taken from the tests of other scenes, so as to further reduce the use cost of the reference airfoil model. In addition, compared with coatings, a film-type structure is easier to control its surface roughness. By using a separative protective film with a surface roughness close to the surface roughness of the reference airfoil model, the introduction of other roughnesses can be reduced as much as possible, thereby ensuring the effectiveness of the tested result.

As an example, the surface of the reference airfoil model is usually provided with pressure taps so as to arrange pressure sensor probes for testing. During a test, a layer of separative protective film can be first covered on the surface of the reference airfoil model, then holes are made at positions, each covering a pressure tap, on the separative protective film, and the holes and the pressure taps are blocked by plugs. After coating the paint, the plugs are removed, thereby obtaining an airfoil model covered with the separative protective film and the topcoat as well as having the pressure taps, for using in the test.

In the following, in conjunction with a specific embodiment, the method for correcting aerodynamic-characteristic data of an airfoil according to an exemplary embodiment of the present disclosure is described. An overall logic of this specific embodiment is to adopt a specific method for measuring a topcoat roughness of a blade surface to acquire a certain amount of topcoat roughness data for performing statistical processing, where parameters that can be used specifically include but not limited to: the arithmetic average roughness Ra, the ten-point height average Rz, the root mean square roughness Rq, the total height Rt, the roughness profile length Rc, the mean spacing Rsm of roughness profile elements, the relative material ratio Rmr, the total profile-unevenness Pt, and the slope Pmr of the material ratio curve. After roll-coating the surface of the reference airfoil model with the topcoat in the wind tunnel test, the certain amount of topcoat roughness data is measured for performing statistical processing, and aerodynamic-characteristic data of the airfoil under different inflow states are measured. Through the roughness data analysis and a magnitude relationship, the aerodynamic-characteristic data that can represent the surface state of the blade is corrected and determined. In other words, for the target roughness, this specific embodiment adopts the method of actually measuring the topcoat roughness of the to-be-tested blade.

In an implementation, the above logic mainly includes the following three parts.

In Part 1, topcoat roughness data of the blade surface is acquired.

### A) Sampling area of the to-be-tested blade

One or more to-be-tested blades are selected, and a placement posture of each of the to-be-tested blades is observed, where each of the to-be-tested blades includes but is not limited to 3 sampling areas respectively taken at a blade root, a blade middle, and a blade tip.

If a to-be-tested blade is placed uprightly, with the leading edge facing downward and the trailing edge facing upward, then on the suction side along the spanwise direction, three spanwise position areas are selected, i.e. a maximum chord length area (located near the blade root), a left-right area of a middle support (located at the blade middle), and a navigation warning paint starting area or an area within 10 meters from the blade tip (located at the blade tip). For each of the three spanwise position areas, an area within 40% of the chord length from the leading edge is further selected along the chordwise direction, and each area as selected is about 0.2 m².

If the blade is placed horizontally, with the pressure side facing upward, similarly, the maximum chord length area, the left-right area of the middle support, the navigation warning paint starting area or the area within 10 meters from the blade tip are selected along the spanwise direction, and an area within 40% of the chord length from the leading edge is selected along the chordwise direction. The suction side is preferably selected. If it is inconvenient for measurement operation, the pressure surface can be selected, and it should be satisfied that a roughness meter can be stably placed thereon.

The above two types of sampling areas are both obtained by sampling on the topcoat-coated surface, avoiding areas where a protection system of the leading edge, a lightning receptor, and surface marks are located.

### B) Selection of sampling points

Within each selected sampling area mentioned above, a 40 cm * 40 cm square area with uniform coating quality of the topcoat visually and by finger touch is selected. A total of 5*5, i.e. 25, sampling points are marked with a marker pen or a pencil, and a spacing between every two sampling points is 10 cm, forming a sampling point array.

### C) Measurement steps

A measurement task is carried out according to the following steps.
1) According to the placement posture of the blade, suitable sampling areas are selected according to the examples in Section A).
2) In each sampling area, the sampling points are marked according to the examples in Section B).
3) Measurement parameters of the roughness meter are set. It should be understood that in embodiments in which the process-roughness correspondence information is obtained in a statistical manner, when uniform measurement is performed on a large number of topcoat samples, a roughness meter of the same model as here is also used, and measurement parameters consistent with those set here are set, so as to ensure that a unified measurement standard is used in different embodiments.
4) Calibration measurement is performed using a calibration plate with which the roughness meter is provided. The number of measurements is not less than 3. If a deviation of the measurement value (generally the arithmetic average roughness Ra) is convergent to less than 0.05 µm, the calibration is set to be completed and the calibrated data is recorded.
5) At the marked sampling points, the calibrated roughness meter is used to sequentially measure respective roughness values at positions, each being a position where a marked sampling point is located, roughness result data including but not limited to the arithmetic average roughness Ra, the ten-point height average Rz, the root mean square roughness Rq, or the like are recorded, and the recorded data are organized into a table. Some instruments having host computer software can measure, record, store, and transmit data in a semi-automatic manner.
6) Statistical processing is performed on the sampled roughness result data to obtain the statistical value as the target roughness.

In Part 2, the wind tunnel test is performed on the reference airfoil model to acquire the topcoat aerodynamic-characteristic data.

According to the topcoat roughness value (i.e., the target roughness) obtained in Part 1, the topcoat is coated on the surface of the reference airfoil model in the wind tunnel test, to reproduce the target roughness, and the reproduced airfoil model is used to carry out the test. During the process of reproducing the target roughness, it often fails to match the target roughness measured in the above part. In this case, at least one piece of aerodynamic-characteristic data of the reference airfoil model corresponding to a topcoat roughness greater than the target roughness and at least one piece of aerodynamic-characteristic data of the reference airfoil model corresponding to a topcoat roughness less than the target roughness are obtained through the test. Then, in combination with the target roughness, interpolation processing is performed on the aerodynamic-characteristic data obtained through the test, so that the topcoat aerodynamic-characteristic data of the reference airfoil with the actual target roughness can be obtained.

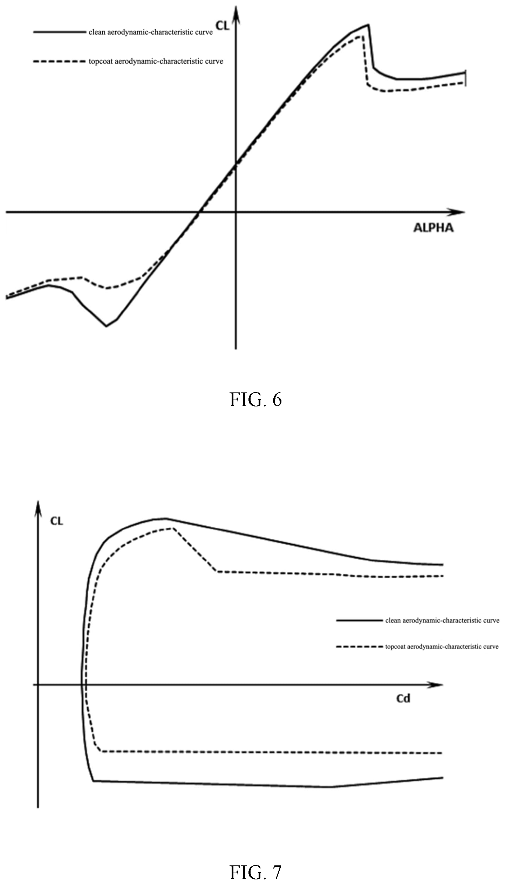

From aerodynamic knowledge, it can be known that when a surface state of a model changes, aerodynamic characteristics (especially the development of a boundary layer and related parameters) of a corresponding airfoil will be affected. Key aerodynamic-characteristic parameters acquired in the present disclosure are the lift coefficient CL, the drag coefficient Cd, the pitching moment coefficient Cm, and the lift-to-drag ratio K of the airfoil corresponding to the surface being covered with the topcoat. Through analyzing the data obtained by the wind tunnel test, it is found that the aerodynamic characteristics of the airfoil corresponding to the surface covered with the topcoat change significantly, including: the lift coefficient CL decreases to a certain extent, the drag coefficient Cd increases to a certain extent, the pitching moment coefficient Cm increases to a certain extent, the lift-to-drag ratio K decreases to a certain extent, and an angle of attack for stall reduces to a certain extent. The changes of typical aerodynamic-characteristic curves are shown in FIG. 6 to FIG. 9, which respectively show the clean aerodynamic-characteristic curves under the clean condition and the topcoat aerodynamic-characteristic curves under the topcoat state.

In Part 3, the aerodynamic-characteristic data of the airfoil is determined when considering the topcoat on the blade surface.

There are two forms for implementing this part.

In form 1), the topcoat aerodynamic-characteristic data of the reference airfoil with the target roughness measured in the wind tunnel test in Part 2 above is directly used. In other words, it is to directly carry out the test in Part 2. The advantage of this form lies in that the data is real and reliable, enabling the consistency between calculation and test to be better. The disadvantage lies in that the surface roughness cannot be precisely controlled artificially, and there are many sensitive variables. Thus, it is necessary to perform test on different roughnesses for multiple times, to enrich available aerodynamic-characteristic data.

In form 2), based on the existing original aerodynamic-characteristic data of a known airfoil obtained from the wind tunnel test or numerical simulation, comparison is performed on such data with the topcoat aerodynamic-characteristic data of this airfoil obtained from the test in Part 2, to determine the correction parameter, and apply this correction parameter to other airfoils. Thus, for an airfoil of these other airfoils, the corrected aerodynamic-characteristic data considering the topcoat is obtained based on the original aerodynamic-characteristic data of this known airfoil. For the determination of the correction parameter, for example, the original aerodynamic-characteristic data may include the clean aerodynamic-characteristic data under the clean condition and the rough aerodynamic-characteristic data under the rough condition, and the correction parameter is the combination ratio of the clean aerodynamic-characteristic data and the rough aerodynamic-characteristic data. When determining the combination ratio, a numerical fitting method can be used to compare a result obtained through combining the above clean aerodynamic-characteristic data and the rough aerodynamic-characteristic data by using the combination ratio with the topcoat aerodynamic-characteristic data obtained from the test in Part 2, and determine an approximate fitting result. The advantage of this form lies in that there is no need to spend financial and human resources to measure the topcoat aerodynamic-characteristic data of different airfoils, and it can be obtained by approximately processing through numerical calculation and fitting methods. In order to improve the accuracy of the approximate processing, the wind tunnel test can also be performed on various airfoils and various topcoat roughnesses, so as to more accurately apply appropriate correction parameter values to different airfoils and topcoat roughnesses.

Regardless of which of the above forms is adopted, the finally obtained aerodynamic-characteristic data considering the topcoat is closer to the actual state of the blade covered with the topcoat when leaving the factory than the aerodynamic-characteristic data obtained directly from the test on standard airfoils after fine polishing of metal or composite material processing surfaces or obtained from computational simulations, being conducive to improving the consistency between simulation and test of the blade performance and the whole wind turbine performance.

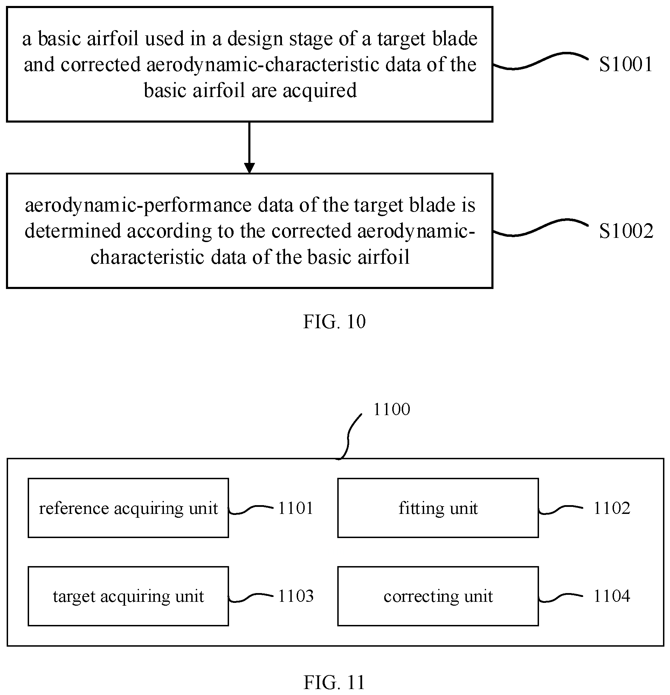

Embodiments of a second aspect of the present disclosure provide a method for determining aerodynamic-performance data of a blade. FIG. 10 is a flowchart illustrating a method for determining aerodynamic-performance data of a blade according to an embodiment of the present disclosure.

Referring to FIG. 10, in step S1001, a basic airfoil used in a design stage of a target blade and corrected aerodynamic-characteristic data of the basic airfoil are acquired.

The basic airfoil is a standard airfoil used for designing a blade. Blade design often uses multiple standard airfoils, and this step can be executed for each standard airfoil respectively.

In step S1002, aerodynamic-performance data of the target blade is determined according to the corrected aerodynamic-characteristic data of the basic airfoil.

Herein, the corrected aerodynamic-characteristic data of the basic airfoil is obtained by the method for correcting aerodynamic-characteristic data of an airfoil provided by any embodiment of the first aspect of the present disclosure, that is, the corrected aerodynamic-characteristic data obtained by using this correction method is applied to the blade performance calculation, and of course can be further applied to the performance calculation of the whole wind turbine. Therefore, the method for determining aerodynamic-performance data of a blade in the embodiments of the present disclosure has all the beneficial technical effects of the aforementioned method for correcting aerodynamic-characteristic data of an airfoil, which will not be repeated here. By applying the corrected aerodynamic-characteristic data of the basic airfoil in blade design, the power generation performance and load levels of the blade and the whole wind turbine can be calculated and analyzed in a manner closer to the physical reality, and used to guide the performance and load calculations of the whole wind turbine under different application environments, thereby improving the reliability of blade and wind turbine development.

The calculation method in step S1002 can refer to the method for determining the aerodynamic-performance data of a blade according to the clean aerodynamic-characteristic data of the basic airfoil, where the clean aerodynamic-characteristic data is replaced with the corrected aerodynamic-characteristic data. In short, based on the BEM theory, the blade is regarded as a whole composed of multiple blade elements distributed along the spanwise direction. For each blade element, since an airfoil of this blade element is obtained by interpolating multiple standard airfoils during the design stage, the corrected aerodynamic-characteristic curve of the airfoil of this blade element can also be obtained by performing interpolation on respective pieces of the corrected aerodynamic-characteristic curves of the multiple standard airfoils; and then, based on this obtained curve and an inflow state (such as an inflow angle and a local flow velocity), the lift and drag of this blade element are calculated. Finally, the lifts and drags of all blade elements are integrated to obtain a total lift and a total drag of the blade, as well as the resulting thrust and torque. An actual output power of the blade can be further calculated in combination with the torque and the designed rotational speed of the rotor, thereby obtaining a power coefficient of the blade (a ratio of the actual output power to a total power of the wind). These data can all be used as the aerodynamic-performance data of the blade.

Through actual calculations, it is found that in a case that the topcoat aerodynamic-characteristic data and the corrected aerodynamic-characteristic data considering the topcoat state are used, compared with the case in which calculation is performed using the clean aerodynamic-characteristic data, the calculation result of the power generation of the whole wind turbine is reduced to a certain extent, limit loads and fatigue loads of large components including the blade have changes to different extents, and an overall result is closer to the actual operating condition of the wind turbine. Specifically, for the reasonable calculation of power generation, a compensation loss due to performance non-compliance caused by overestimating the power generation can be avoided. For the calculation of loads, the reasonably increased parts compared with a calculation result of the existing calculation method can capture a situation where the design scheme meets the load requirements more quickly, thereby reducing a workload of design simulation iteration; the reasonably reduced parts compared with the calculation result of the existing calculation method can more truthfully reflect a fact that the current scheme has insufficient load-bearing capacity, thereby reducing the risk of the actual operating load of the wind turbine exceeding the limit.

Embodiments of a third aspect of the present disclosure provide an apparatus for correcting aerodynamic-characteristic data of an airfoil. FIG. 11 is a block diagram illustrating an apparatus for correcting aerodynamic-characteristic data of an airfoil according to an embodiment of the present disclosure. Referring to FIG. 11, the apparatus 1100 for correcting aerodynamic-characteristic data of an airfoil includes a reference acquiring unit 1101, a fitting unit 1102, a target acquiring unit 1103, and a correcting unit 1104.

The reference acquiring unit 1101 can acquire original aerodynamic-characteristic data and topcoat aerodynamic-characteristic data of a reference airfoil, where the topcoat aerodynamic-characteristic data is data obtained by performing an aerodynamic-characteristic test on a reference airfoil model covered with a topcoat, and the reference airfoil model is an equivalent-airfoil polished model having the reference airfoil.

The fitting unit 1102 can perform fitting processing on the original aerodynamic-characteristic data and the topcoat aerodynamic-characteristic data of the reference airfoil to obtain a correction parameter.

The target acquiring unit 1103 can acquire original aerodynamic-characteristic data of a target airfoil.

The correcting unit 1104 can correct the original aerodynamic-characteristic data of the target airfoil according to the correction parameter to obtain corrected aerodynamic-characteristic data of the target airfoil.

In an implementation, the topcoat aerodynamic-characteristic data is aerodynamic-characteristic data of the reference airfoil in a topcoat-cover state and having a target roughness; and a topcoat roughness of the target airfoil is within a target roughness range, and the target roughness range is related to the target roughness.

In an implementation, a relative thickness of the target airfoil is within a target relative-thickness range, and the target relative-thickness range is related to a relative thickness of the reference airfoil.

In an implementation, the apparatus for correcting aerodynamic-characteristic data of an airfoil further includes a sampling unit (not shown in the figure) and a statistical unit (not shown in the figure). The sampling unit can acquire multiple roughness sampled values of a to-be-tested blade, where the to-be-tested blade is a blade designed based on the reference airfoil and covered with the topcoat; and the statistical unit can perform statistical processing on the multiple roughness sampled values to obtain the target roughness.

In an implementation, the reference acquiring unit 1101 can also: acquire at least one piece of first tested aerodynamic-characteristic data and at least one piece of second tested aerodynamic-characteristic data, where the first tested aerodynamic-characteristic data is obtained by performing the aerodynamic-characteristic test on a first reference airfoil model having a topcoat roughness less than the target roughness, and the second tested aerodynamic-characteristic data is obtained by performing the aerodynamic-characteristic test on a second reference airfoil model having a topcoat roughness greater than the target roughness; and perform interpolation processing on the at least one piece of first tested aerodynamic-characteristic data and the at least one piece of second tested aerodynamic-characteristic data according to the target roughness, to obtain the topcoat aerodynamic-characteristic data.

In an implementation, the reference airfoil model covered with the topcoat is a model obtained by coating the topcoat on a surface of the reference airfoil model according to a reference process parameter, where the reference process parameter is a process parameter used by a to-be-tested blade for processing the topcoat, and the to-be-tested blade is a blade designed based on the reference airfoil; and the target roughness is obtained by performing retrieval in process-roughness correspondence information based on the reference process parameter, the process-roughness correspondence information being used to record process parameters and corresponding topcoat roughnesses, and/or, the target roughness is obtained by measuring the reference airfoil model covered with the topcoat.

In an implementation, a separative protective film is arranged between the reference airfoil model and the topcoat, and a difference of a surface roughness of the separative protective film relative to a surface roughness of the reference airfoil model is less than a difference threshold.

In an implementation, according to different surface roughness degrees of a blade, surface conditions of the blade include a clean condition and a rough condition, where the clean condition corresponds to a polished surface which is not covered with the topcoat, the rough condition corresponds to a surface that causes a flow around the airfoil to reach a fully turbulent state, and the original aerodynamic-characteristic data includes clean aerodynamic-characteristic data under the clean condition; and the correction parameter includes at least one of a combination ratio and a correction amount, where the original aerodynamic-characteristic data further includes rough aerodynamic-characteristic data under the rough condition, the combination ratio is used for combining the clean aerodynamic-characteristic data and the rough aerodynamic-characteristic data of the reference airfoil so that a combined result approximates the topcoat aerodynamic-characteristic data, and the correction amount includes at least one of an absolute correction value and a correction proportion, and the correction amount is used for correcting the clean aerodynamic-characteristic data of the reference airfoil so that a corrected result approximates the topcoat aerodynamic-characteristic data.

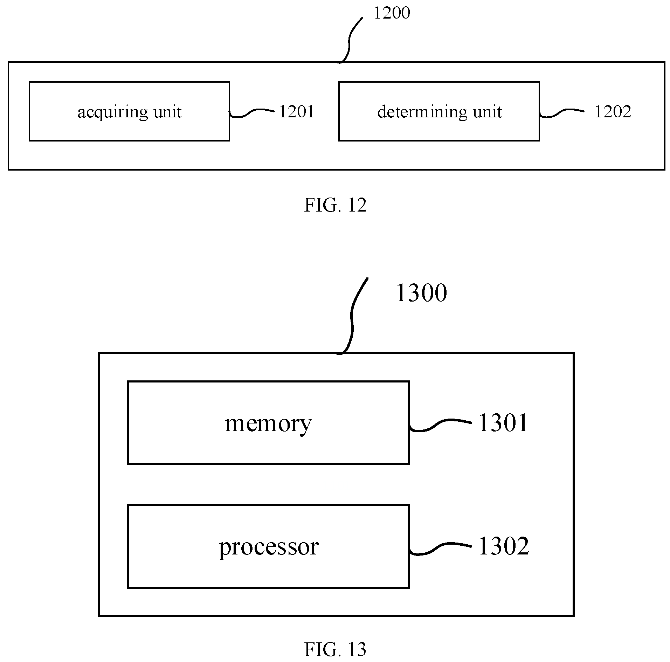

Embodiments of the third aspect of the present disclosure provide an apparatus for determining aerodynamic-performance data of a blade. FIG. 12 is a block diagram illustrating an apparatus for determining aerodynamic-performance data of a blade according to an embodiment of the present disclosure. Referring to FIG. 12, the apparatus 1200 for determining aerodynamic-performance data of a blade includes an acquiring unit 1201 and a determining unit 1202.

The acquiring unit 1201 can acquire a basic airfoil used in a design stage of a target blade and corrected aerodynamic-characteristic data of the basic airfoil.

The determining unit 1202 can determine aerodynamic-performance data of the target blade according to the corrected aerodynamic-characteristic data of the basic airfoil.

Here, the corrected aerodynamic-characteristic data of the basic airfoil is obtained by the method for correcting aerodynamic-characteristic data of an airfoil provided by any embodiment of the first aspect of the present disclosure.

Regarding the apparatus in the above embodiments, the specific manner in which each unit performs operations has been described in detail in the embodiments concerning the relevant methods, and will not be elaborated here.

The method for correcting aerodynamic-characteristic data of an airfoil or the method for determining aerodynamic-performance data of a blade according to embodiments of the present disclosure can be written as a computer program and stored on a computer-readable storage medium. When the instructions corresponding to the computer program are executed by a processor, the method for correcting aerodynamic-characteristic data of an airfoil or the method for determining aerodynamic-performance data of a blade as described above can be implemented. Examples of the computer-readable storage medium include: Read Only Memory (ROM), Random Access Programmable Read Only Memory (PROM), Electrically Erasable Programmable Read-Only Memory (EEPROM), Random Access Memory (RAM), Dynamic Random Access Memory (DRAM), Static Random Access Memory (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, Blu-ray or optical disk storage, Hard Disk Drive (HDD), Solid State Drive (SSD), card-type memory (such as multimedia card, Secure Digital (SD) card or Extreme Digital (XD) card), magnetic tape, floppy disk, magneto-optical data storage device, optical data storage device, hard disk, solid-state disk, and any other device configured to store the computer program and any associated data, data files, and data structures in a non-transitory manner and provide the same to a processor or computer so that the processor or computer can execute the computer program. In one example, the computer program and any associated data, data files, and data structures are distributed on networked computer systems, so that the computer program and any associated data, data files, and data structures are stored, accessed, and executed in a distributed manner by one or more processors or computers.

FIG. 13 is a block diagram illustrating a computer device according to an embodiment of the present disclosure.

Referring to FIG. 13, the computer device 1300 includes at least one memory 1301 and at least one processor 1302. The at least one memory 1301 stores a set of computer-executable instructions. When the set of computer-executable instructions is executed by the at least one processor 1302, the method for correcting aerodynamic-characteristic data of an airfoil or the method for determining aerodynamic-performance data of a blade according to exemplary embodiments of the present disclosure is executed.

As an example, the computer device 1300 may be a PC computer, a tablet device, a personal digital assistant, a smartphone, or other device capable of executing the above set of instructions. Here, the computer device 1300 does not necessarily have to be a single electronic device, but can also be any collection of devices or circuits capable of individually or jointly executing the above instructions (or instruction set). The computer device 1300 can also be part of an integrated control system or a system manager, or can be configured as a portable electronic device interconnected with a local or remote (e.g., via wireless transmission) interface.

In the computer device 1300, the processor 1302 may include a Central Processing Unit (CPU), a Graphics Processing Unit (GPU), a programmable logic device, a dedicated processor system, a microcontroller, or a microprocessor. By way of example and not limitation, the processor may also include an analog processor, a digital processor, a microprocessor, a multi-core processor, a processor array, a network processor, etc.

The processor 1302 can run instructions or codes stored in the memory 1301, where the memory 1301 can also store data. The instructions and data can also be sent and received via a network through a network interface device, where the network interface device can adopt any known transmission protocol.

The memory 1301 may be integrated with the processor 1302, for example, arranging RAM or flash memory within an integrated circuit microprocessor, etc. In addition, the memory 1301 may include an independent device, such as an external disk drive, a storage array, or any other storage device that any database system can use. The memory 1301 and the processor 1302 may be operationally coupled, or may communicate with each other, for example, through an I/O port, a network connection, etc., so that the processor 1302 can read files stored in the memory.

In addition, the computer device 1300 may also include a video display (such as a liquid crystal display) and a user interaction interface (such as a keyboard, a mouse, a touch input device, etc.). All components of the computer device 1300 may be connected to each other via a bus and/or a network.

The present disclosure proposes a method and an apparatus for correcting aerodynamic-characteristic data of an airfoil, a method and an apparatus for determining aerodynamic-performance data of a blade, a computer-readable storage medium, and a computer device. By performing an aerodynamic-characteristic test on a reference airfoil model covered with a topcoat, topcoat aerodynamic-characteristic data of the corresponding reference airfoil considering the influence of the topcoat can be obtained, thereby determining a correction parameter in combination with the original aerodynamic-characteristic data and the topcoat aerodynamic-characteristic data, and being able to more clearly reflect the influence of the topcoat on the aerodynamic characteristics of the airfoil. On this basis, by correcting the original aerodynamic-characteristic data of the target airfoil using the correction parameter, the aerodynamic-characteristic data of other airfoils (i.e., the target airfoil) after covering the topcoat can be inferred using a small number of tests (i.e., tests for the reference airfoil), as the corrected aerodynamic-characteristic data, so that the corrected aerodynamic-characteristic data of the airfoil is more consistent with actual operating conditions, which helps to clarify the influence of the topcoat on the aerodynamic performance of the blade, improve the cognition of the operating states of the blade and the wind turbine generator system, and improve the consistency between simulation and testing of the blade and the whole machine.

The specific embodiments of the present disclosure have been described in detail above. Although some embodiments have been shown and described, those skilled in the art should understand that modifications and variations can be made to these embodiments without departing from the principles and spirit of the present disclosure, the scope of which is defined by the claims and their equivalents, and these modifications and variations should also fall within the protection scope of the claims of the present disclosure.

## Claims

1. A method for correcting aerodynamic-characteristic data of an airfoil, comprising:
acquiring original aerodynamic-characteristic data and topcoat aerodynamic-characteristic data of a reference airfoil, wherein the topcoat aerodynamic-characteristic data is data obtained by performing an aerodynamic-characteristic test on a reference airfoil model covered with a topcoat, and the reference airfoil model is an equivalent-airfoil polished model having the reference airfoil;
performing fitting processing on the original aerodynamic-characteristic data and the topcoat aerodynamic-characteristic data of the reference airfoil to obtain a correction parameter;
acquiring original aerodynamic-characteristic data of a target airfoil; and
correcting the original aerodynamic-characteristic data of the target airfoil according to the correction parameter to obtain corrected aerodynamic-characteristic data of the target airfoil.

2. The method for correcting aerodynamic-characteristic data of an airfoil according to claim 1, wherein,
the topcoat aerodynamic-characteristic data is aerodynamic-characteristic data of the reference airfoil in a topcoat-cover state and having a target roughness; and
a topcoat roughness of the target airfoil is within a target roughness range, and the target roughness range is related to the target roughness.

3. The method for correcting aerodynamic-characteristic data of an airfoil according to claim 1, wherein,
a relative thickness of the target airfoil is within a target relative-thickness range, and the target relative-thickness range is related to a relative thickness of the reference airfoil.

4. The method for correcting aerodynamic-characteristic data of an airfoil according to claim 2, further comprising:
acquiring a plurality of roughness sampled values of a to-be-tested blade, wherein the to-be-tested blade is a blade designed based on the reference airfoil and covered with the topcoat; and
performing statistical processing on the plurality of roughness sampled values to obtain the target roughness.

5. The method for correcting aerodynamic-characteristic data of an airfoil according to claim 2, wherein acquiring topcoat aerodynamic-characteristic data of the reference airfoil comprises:
acquiring at least one piece of first tested aerodynamic-characteristic data and at least one piece of second tested aerodynamic-characteristic data, wherein the first tested aerodynamic-characteristic data is obtained by performing the aerodynamic-characteristic test on a reference airfoil model having a topcoat roughness less than the target roughness, and the second tested aerodynamic-characteristic data is obtained by performing the aerodynamic-characteristic test on a reference airfoil model having a topcoat roughness greater than the target roughness; and
performing interpolation processing on the at least one piece of first tested aerodynamic-characteristic data and the at least one piece of second tested aerodynamic-characteristic data according to the target roughness, to obtain the topcoat aerodynamic-characteristic data.

6. The method for correcting aerodynamic-characteristic data of an airfoil according to claim 2, wherein,
the reference airfoil model covered with the topcoat is a model obtained by coating the topcoat on a surface of the reference airfoil model according to a reference process parameter, wherein the reference process parameter is a process parameter used by a to-be-tested blade for processing the topcoat, and the to-be-tested blade is a blade designed based on the reference airfoil; and
the target roughness is obtained by performing retrieval in process-roughness correspondence information based on the reference process parameter, the process-roughness correspondence information being used to record process parameters and corresponding topcoat roughnesses, and/or, the target roughness is obtained by measuring the reference airfoil model covered with the topcoat.

7. The method for correcting aerodynamic-characteristic data of an airfoil according to any one of claims 1 to 6, wherein,
a separative protective film is arranged between the reference airfoil model and the topcoat, and a difference of a surface roughness of the separative protective film relative to a surface roughness of the reference airfoil model is less than a difference threshold.

8. The method for correcting aerodynamic-characteristic data of an airfoil according to any one of claims 1 to 6, wherein,
according to different surface roughness degrees of a blade, surface conditions of the blade comprise a clean condition and a rough condition, wherein the clean condition corresponds to a polished surface which is not covered with the topcoat, the rough condition corresponds to a surface that causes a flow around the airfoil to reach a fully turbulent state, and the original aerodynamic-characteristic data comprises clean aerodynamic-characteristic data under the clean condition; and
the correction parameter comprises at least one of a combination ratio and a correction amount,
wherein the original aerodynamic-characteristic data further comprises rough aerodynamic-characteristic data under the rough condition, the combination ratio is used for combining the clean aerodynamic-characteristic data and the rough aerodynamic-characteristic data of the reference airfoil so that a combined result approximates the topcoat aerodynamic-characteristic data, and
the correction amount comprises at least one of an absolute correction value and a correction proportion, and the correction amount is used for correcting the clean aerodynamic-characteristic data of the reference airfoil so that a corrected result approximates the topcoat aerodynamic-characteristic data.

9. A method for determining aerodynamic-performance data of a blade, comprising:
acquiring a basic airfoil used in a design stage of a target blade and corrected aerodynamic-characteristic data of the basic airfoil; and
determining aerodynamic-performance data of the target blade according to the corrected aerodynamic-characteristic data of the basic airfoil,
wherein the corrected aerodynamic-characteristic data of the basic airfoil is obtained by the method for correcting aerodynamic-characteristic data of an airfoil according to any one of claims 1 to 8.

10. An apparatus for correcting aerodynamic-characteristic data of an airfoil, comprising:
a reference acquiring unit, configured to acquire original aerodynamic-characteristic data and topcoat aerodynamic-characteristic data of a reference airfoil, wherein the topcoat aerodynamic-characteristic data is data obtained by performing an aerodynamic-characteristic test on a reference airfoil model covered with a topcoat, and the reference airfoil model is an equivalent-airfoil polished model having the reference airfoil;
a fitting unit, configured to perform fitting processing on the original aerodynamic-characteristic data and the topcoat aerodynamic-characteristic data of the reference airfoil to obtain a correction parameter;
a target acquiring unit, configured to acquire original aerodynamic-characteristic data of a target airfoil; and
a correcting unit, configured to correct the original aerodynamic-characteristic data of the target airfoil according to the correction parameter to obtain corrected aerodynamic-characteristic data of the target airfoil.

11. An apparatus for determining aerodynamic-performance data of a blade, comprising:
an acquiring unit, configured to acquire a basic airfoil used in a design stage of a target blade and corrected aerodynamic-characteristic data of the basic airfoil; and
a determining unit, configured to determine aerodynamic-performance data of the target blade according to the corrected aerodynamic-characteristic data of the basic airfoil,
wherein the corrected aerodynamic-characteristic data of the basic airfoil is obtained by the method for correcting aerodynamic-characteristic data of an airfoil according to any one of claims 1 to 8.

12. A computer-readable storage medium, wherein, when instructions stored in the computer-readable storage medium are run by at least one processor, the at least one processor is caused to execute the method for correcting aerodynamic-characteristic data of an airfoil according to any one of claims 1 to 8 or the method for determining aerodynamic-performance data of a blade according to claim 9.

13. A computer device, comprises:
at least one processor; and
at least one memory storing computer-executable instructions,
wherein when the computer-executable instructions are run by the at least one processor, the at least one processor is caused to execute the method for correcting aerodynamic-characteristic data of an airfoil according to any one of claims 1 to 8 or the method for determining aerodynamic-performance data of a blade according to claim 9.
